# EUROPÄISCHE PATENTANMELDUNG

(11) **EP 2 260 966 A1**
(43) Veröffentlichungstag der Anmeldung: **15.12.2010**
(21) Anmeldenummer: 10006048.2
(22) Anmeldetag: 11.06.2010
(51) Int. Cl.: B23K 1/005, B23K 26/34, H01H 11/04, H01R 43/02

(54) **Verfahren zur partiellen stofflichen Verbindung mittels Laserstrahl von Bauteilen mit pastösen schmelzbaren Materialien**

(30) Priorität: 12.06.2009 DE 102009024962
(71) Anmelder: Sitec Industrietechnologie GmbH, 09114 Chemnitz (DE)
(72) Erfinder: Fischer, Dieter, 09244 Lichtenau (DE); Hahn, Jens, 09116 Chemnitz (DE)
(74) Vertreter: Findeisen Hübner Neumann

(57) **Zusammenfassung**

Die Erfindung betrifft ein Verfahren zur partiellen stofflichen Verbindung von Bauteilen mit schmelzbaren Materialien. Es wird die Aufgabe gelöst, ein solches Verfahren zu schaffen, mit dem eine Vielzahl von Kontakten und ähnlichen Beschichtungen aus schmelzbaren Materialien mit geringem Zeit- sowie Materialaufwand und dadurch kostengünstig mittels Laserstrahl auf Bauteilen ausgebildet werden können. Dies wird dadurch erreicht, dass das auf das Bauteil aufzubringende schmelzbare Material als ein Pulver ausgestaltet ist, wobei dieses Pulver Bestandteil eines pastösen Materialgemenges ist, das neben dem Pulver zumindest ein Bindemittel aufweist, wobei das Materialgemenge nach dem partiellen Auftragen auf das Bauteil durch Zufuhr von Energie aus dem pastösen Zustand, ohne dass die Bindungskräfte innerhalb des Materialgemenges aufgehoben werden, in einen festen Zustand überführt wird und auf der Oberfläche des Bauteiles verbleibt und wobei nachfolgend nur der Pulveranteil des Materialgemenges mittels Laserstrahl mit dem Bauteil stofflich verbunden wird.

## Beschreibung

Die Erfindung betrifft ein Verfahren zur partiellen stofflichen Verbindung von Bauteilen mit schmelzbaren Materialien, wobei auf die Oberfläche der Bauteile ein Material aufgetragen wird, das an denjenigen Abschnitten der Bauteile, an denen die Verbindung ausgestaltet werden soll, unter Verwendung eines Laserstrahls aufgeschmolzen und aufgebracht wird.

Für zahlreiche technische Anwendungen werden auf Objekte aus einem kostengünstigen Werkstoff abschnittsweise teure Materialien aufgetragen. So werden auf Stents, die zur Stabilisierung von Gefäßstrukturen bekannt sind, kleine Markierungen (<0,5 mm x 0,2 mm) aus Tantal aufgebracht, die eine Röntgensichtbarkeit der Gefäßimplantate ermöglichen. In der Fahrzeugtechnik, der Telekommunikation und der Industrieelektrik werden zur Reduzierung von Übergangswiderständen Kontaktgeometrien realisiert, die als kurze Linien oder kleine Punkte ausgestaltet sind und zur Kostenreduzierung Abmessungen von etwa 30 µm x 15 µm aufweisen. Für diese Kontaktgeometrien wird für die zu erreichende Funktionalität auf ein Basismaterial vorzugsweise Hartgold aufgetragen. Schließlich ist es bekannt, bei der Herstellung von Brennstoffzellen lokal begrenzte Kontaktpunkte mit Schichtdicken < 20 µm zu erzeugen. Diese Kontaktpunkte werden überwiegend auf Bipolarplatten aus Nickelbasis- bzw. Edelstahllegierungen aufgetragen.

Bei den lediglich beispielsweise benannten Anwendungen aus der Medizin-, Elektro- und Energietechnik ist die Handhabung der kostenintensiven Materialien problematisch, die an sehr kleinen Oberflächenabschnitten und in sehr kleinen Mengen aufzubringen sind.

DE 101 57 320 A1 beschreibt ein Verfahren zur Herstellung von Mikrokontakten zum Kontaktieren von Leiterbahnen oder Leiterflächen. Hierbei wird für diese Bauteile ein kostengünstiges Metall mit guter elektrischer Leitfähigkeit verwendet. Die notwendige Verschleißfestigkeit und Korrosionsbeständigkeit, die primär nur für die Kontaktflächen gewährleistet werden muss, wird erreicht, indem die Bauteile im Bereich der auszugestaltenden Kontakte durch Auftragsschweißen beschichtet werden. Hierfür wird zunächst ein Pulver mit einer Edelmetall enthaltenden Legierung durch einen Förderer auf das Bauteil aufgeblasen. Während des Auftragsschweißens wird dieses Pulver unter Verwendung eines Laserstrahls punktuell aufgeschmolzen. Durch die hohe Energiezufuhr ergibt sich ein Schmelzvolumen, das aus einem jeweils verflüssigten Anteil des Bauteiles und des im Pulver enthaltenen Beschichtungsmaterials besteht und das nach dem Erkalten den Kontaktpunkt darstellt.

Aus EP 1 315 255 B1 ist ein Verfahren zur Herstellung von Mikrokontakten auf Trägern bekannt, bei dem alternativ zur Verwendung eines Pulvers das kostenintensive Edelmetall zur Beschichtung in Form eines Runddrahtes zugeführt wird. Dieser Runddraht ist als ein Manteldraht ausgestaltet, mit einem Kern aus unedlem Metall und einem Mantel aus einer Legierung, die zumindest ein Edelmetall enthält. Für die Ausbildung der Kontakte werden die Runddrähte an der jeweils relevanten Stelle positioniert und am vorderen Abschnitt mit einem Laserstrahl aufgeschmolzen.

In EP 1 640 108 B1 wird ein Verfahren zur Herstellung von Kontakten beschrieben, wobei eine Edelmetall enthaltende Beschichtung durch Laserschweißen auf einen Träger aufgebracht wird. Hierbei werden die Betriebsparameter des gepulsten Lasers derart dimensioniert, dass die Temperatur im Schweißbereich während des Schweißvorgangs um die Schmelztemperatur so oszilliert, dass die Schmelze abwechselnd verflüssigt wird und wieder erstarrt.

Der oben dargestellte Stand der Technik ist grundsätzlich geeignet, um einen lagefixierten Auftrag der zur Beschichtung notwendigen Materialien auf einem Bauteil mittels Laserschweißen zu gewährleisten.

Nachteilig ist allerdings, dass es bei Verwendung von Pulver nicht möglich ist, dieses Pulver verlustfrei an den Stellen zu positionieren, an denen eine Beschichtung auf dem jeweiligen Bauteil tatsächlich notwendig ist, wobei dies oftmals nur etwa 10% oder noch weniger % der Oberfläche sind. Stattdessen muss das kostenintensive Pulver zunächst flächig aufgetragen und nach Abschluss des Laserauftragsschweißens von den nicht aufgeschmolzenen Abschnitten mittels Absaugen oder ähnlicher Techniken wieder entfernt werden. Alternativ kann das Pulver als Pulverstrahl dem Laserfokus positioniert zugeführt werden, was jedoch ebenso Verluste überschüssigen Materials ergibt und zusätzlich eine wesentlich längere Positionierzeit erfordert. Folglich ergibt sich bei beiden Varianten ein zusätzlicher Kosten- und Zeitaufwand und das Pulver, das an sich erneut verwendbar ist, kann verunreinigt werden.

Sofern das Material hingegen in Drahtform zugeführt wird, ist es möglich, dass mit dem Laserstrahl nur ein solcher Anteil an Edelmetall aufgeschmolzen wird, der tatsächlich für die jeweilige Beschichtung der Bauteile benötigt wird. Somit entfällt das bei Pulver notwendige Absaugen oder dergleichen. Allerdings erfordert die Drahtzuführung ausreichend freien Bauraum, damit der Draht exakt positioniert werden kann. Weiterhin wird für die Positionierung eine aufwändige Gerätetechnik benötigt. Ferner erfordert die Lageänderung der Drähte zwischen den einzelnen Beschichtungspunkten zwangsläufig einen hohen Zeitaufwand.

Aufgabe der Erfindung ist es, ein Verfahren zur partiellen stofflichen Verbindung von Bauteilen mit schmelzbaren Materialien zu schaffen, mit dem eine Vielzahl von Kontakten und ähnlichen Beschichtungen aus schmelzbaren Materialien mit geringem Zeit- sowie Materialaufwand und dadurch kostengünstig mittels Laserstrahl auf Bauteilen ausgebildet werden können.

Diese Aufgabe wird gelöst, indem das auf das Bauteil aufzubringende schmelzbare Material als ein Pulver ausgestaltet ist, wobei dieses Pulver Bestandteil eines pastösen Materialgemenges ist, das neben dem Pulver zumindest ein Bindemittel aufweist, wobei das Materialgemenge nach dem partiellen Auftragen auf das Bauteil durch Zufuhr von Energie aus dem pastösen Zustand, ohne dass die Bindungskräfte innerhalb des Materialgemenges aufgehoben werden, in einen festen Zustand überführt wird und auf der Oberfläche des Bauteiles verbleibt und wobei nachfolgend nur der Pulveranteil des Materialgemenges mittels Laserstrahl mit dem Bauteil stofflich verbunden wird. Vorteilhafte Ausgestaltungen sind Gegenstand von Unteransprüchen, deren technische Merkmale im Ausführungsbeispiel näher beschrieben werden.

Mit dem vorgeschlagenen Verfahren ist es möglich, anstelle der bisher üblichen Zuführung der Beschichtungsmaterialien in Form von Pulver oder Draht eine Vielzahl von Kontakten und ähnlichen Beschichtungen aus schmelzbaren Materialien kostengünstig und mit geringem Zeitaufwand mittels Laserstrahl auszubilden, indem ein Materialgemenge ähnlich einer "Schweißpaste" verwendet wird.

Dieses Verfahren ist für zahlreiche Anwendungen geeignet, bei denen auf Objekte aus einem relativ kostengünstigen Werkstoff abschnittsweise teure Materialien aufgetragen werden müssen. Demzufolge ergeben sich in der Medizintechnik, der Elektrotechnik und der Energietechnik vielfältige Einsatzmöglichkeiten.

### Nachfolgend wird ein Ausführungsbeispiel der Erfindung beschrieben:

Das erfindungsgemäße Verfahren ist zur partiellen stofflichen Verbindung von Bauteilen mit schmelzbaren Materialien vorgesehen. Eine diesbezügliche Anwendung ergibt sich beispielsweise für die abschnittsweise Beschichtung von Bauteilen mit einem Edelmetall, das auf die Oberfläche eines Bauteiles aufgetragen wird und an denjenigen Abschnitten des Bauteiles, an denen die Beschichtung ausgestaltet werden soll, unter Verwendung eines Laserstrahls mittels Auftragsschweißen aufgeschmolzen und aufgebracht wird.

Hierbei ist das auf das Bauteil aufzubringende Metall als ein Pulver ausgestaltet. Sofern beispielsweise Schaltkontakte ausgestaltet werden sollen, kann für die Trägerbaugruppe ein preiswertes Metall mit guter elektrischer Leitfähigkeit verwendet werden. Die spätere Beschichtung der Schaltkontakte erfolgt z.B. mit Gold als schmelzbares Metall.

Das auf das Bauteil aufzubringende schmelzbare Material ist als ein Pulver ausgestaltet, wobei dieses Pulver Bestandteil eines pastösen Materialgemenges ist, das neben dem Pulver zumindest ein Bindemittel aufweist. Beim vorliegenden Ausführungsbeispiel wird folglich Gold in Pulverform als Bestandteil des pastösen Materialgemenges verwendet.

Nachdem dieses Materialgemenge partiell auf das zugeordnete Bauteil aufgetragen worden ist, erfolgt eine Zufuhr von Energie. Dadurch wird das Materialgemenge aus dem pastösen Zustand in einen festen Zustand überführt, ohne dass hierbei die Bindungskräfte innerhalb des Materialgemenges aufgehoben werden. Das jetzt feste Materialgemenge verbleibt auf der Oberfläche des Bauteiles.

Nachfolgend wird mittels Laserstrahl nur der Pulveranteil des Materialgemenges mit dem Bauteil stofflich verbunden, so dass sich an den derart behandelten Stellen jeweils Goldkontakte ausbilden. Durch diese Beschichtung wird der Übergangswiderstand gering gehalten.

Das pastöse Materialgemenge kann verschiedenartig auf das jeweilige Bauteil aufgebracht werden. Sofern hierfür ein Siebdruck genutzt wird, kann mit geringem Aufwand eine sehr exakte Positionierung der später aufzuschmelzenden und folglich mit Metallpulver auszustattenden Punkte realisiert werden. Ebenso kann das pastöse Materialgemenge mittels einer Dosiervorrichtung oder durch Spritzen aufgebracht werden, wobei hier eine exakte Positionierung der mit Metallpulver auszustattenden Punkte z.B. durch Nutzung einer Schablone erreichbar ist.

## Patentansprüche

1. Verfahren zur partiellen stofflichen Verbindung von Bauteilen mit schmelzbaren Materialien, wobei auf die Oberfläche der Bauteile ein Material aufgetragen wird, das an denjenigen Abschnitten der Bauteile, an denen die Verbindung ausgestaltet werden soll, unter Verwendung eines Laserstrahls aufgeschmolzen und aufgebracht wird, **dadurch gekennzeichnet,**
**dass** das auf das Bauteil aufzubringende schmelzbare Material als ein Pulver ausgestaltet ist, wobei dieses Pulver Bestandteil eines pastösen Materialgemenges ist, das neben dem Pulver zumindest ein Bindemittel aufweist, wobei das Materialgemenge nach dem partiellen Auftragen auf das Bauteil durch Zufuhr von Energie aus dem pastösen Zustand, ohne dass die Bindungskräfte innerhalb des Materialgemenges aufgehoben werden, in einen festen Zustand überführt wird und auf der Oberfläche des Bauteiles verbleibt und
wobei nachfolgend nur der Pulveranteil des Materialgemenges mittels Laserstrahl mit dem Bauteil stofflich verbunden wird.

2. Verfahren nach Anspruch 1, **dadurch gekennzeichnet,**
**dass** das pastöse Materialgemenge durch Siebdruck auf das Bauteil aufgebracht wird.

3. Verfahren nach Anspruch 1, **dadurch gekennzeichnet,**
**dass** das pastöse Materialgemenge mittels einer Dosiervorrichtung auf das Bauteil aufgebracht wird.

4. Verfahren nach Anspruch 1, **dadurch gekennzeichnet,**
**dass** das pastöse Materialgemenge durch Spritzen auf das Bauteil aufgebracht wird.

5. Verfahren nach Anspruch 1, **dadurch gekennzeichnet,**
**dass** das pastöse Materialgemenge ein Metallpulver enthält.
